# EUROPEAN PATENT APPLICATION

(11) **EP 2 775 340 A1**
(43) Date of publication of application: **10.09.2014**
(21) Application number: 12845488.1
(22) Date of filing: 31.10.2012
(51) Int. Cl.: G02C 7/02, B05D 1/02, B05D 7/00, G02B 1/10, B05B 1/28

(54) **SPECTACLE LENS AND METHOD FOR PRODUCING SAME**

(30) Priority: 31.10.2011 JP 2011239661
(71) Applicant: Hoya Corporation, Tokyo 161-8525 (JP)
(72) Inventor: WATANABE, Makoto, Shinjuku-ku, Tokyo 1618525 (JP)
(74) Representative: Adam, Holger
(86) International application number: PCT/JP2012/078186
(87) International publication number: WO 2013/065746

(57) **Abstract**

An aspect of the present invention is a method of manufacturing an eyeglass lens comprising coating a coating liquid on a surface of a lens substrate being coated to form a coating layer, which further comprises conducting the coating by spraying a coating liquid, which has been atomized in an ultrasonic wave atomizing device disposed above the surface being coated of a curved shape, toward the surface being coated through a discharge outlet of the ultrasonic wave atomizing device, with the ultrasonic wave atomizing device comprising an ultrasonic wave atomization element atomizing a liquid by ultrasonic wave vibration, and an air flow blowing outlet for regulating a discharge width of an atomized liquid, and either not blowing an air flow from the air flow blowing outlet, or blowing an air flow from the air flow blowing outlet at an air speed generated by the air flow on the surface being coated of equal to or less than 0.8 m/s during discharging of the atomized coating liquid.

## Description

### Cross-reference to related applications

This application claims the benefit of priority to Japanese Patent Application No. 2011-239661 filed on October 31, 2011, which is expressly incorporated herein by reference in its entirety.

### Technical Field

The present invention relates to an eyeglass lens and to a method of manufacturing the same. More specifically, the present invention relates to a method of manufacturing an eyeglass lens that can provide high-quality eyeglass lenses having a coating layer of uniform thickness without great variation in in-plane film thickness, and to an eyeglass lens obtained by the above manufacturing method.

### Background Art

Generally, once a desired refractive index has been achieved by means of the lens substrate, various properties (such as photochromic property, antireflection property, enhanced durability, and the like) are imparted to an eyeglass lens by functional films provided on the lens substrate. The spin-coating method is widely employed as a method of forming such functional films (for example, Japanese Unexamined Patent Publication (KOKAI) Heisei No. 5-19103, which is expressly incorporated herein by reference in its entirety).

The fact that the thickness of functional films formed on lens substrates differs in various in-plane portions is known to cause various defects in eyeglass lenses, such as interference fringes, optical distortion, and cracking. Accordingly, obtaining a high-quality eyeglass lens requires the formation of functional films of uniform thickness on the lens substrate. However, the spin-coating method is a method that drips a coating liquid onto a rotating surface being coated and spreads it over the entire surface by means of centrifugal force due to rotation. Thus, it is not easy to form a coating layer of desired thickness while maintaining in-plane uniformity of thickness. That is because the lower the rotational speed, the more difficult it becomes to uniformly spread the coating liquid over the entire surface of the lens by means of centrifugal force, and the more the in-plane uniformity of film thickness decreases. The more the rotational speed is increased, the greater the centrifugal force becomes and the more coating liquid that flies off the lens. That causes a reduction in the amount of coating liquid that is retained on the lens, making it difficult to form a coating layer of desired film thickness. Further, the coating liquid that flies off the lens due to centrifugal force caused by rotation in the spin-coating method is normally wasted without being recovered. Thus, there is also a problem in that a large amount of coating liquid goes to waste without being employed to form the coating layer (the use efficiency of the coating liquid is low).

By contrast, coating of a coating liquid on a lens by the spraying method (spray-coating method) has been proposed as a substitute method for the spin-coating method (for example, see Japanese Unexamined Patent Publication (KOKAI) Nos. 2001-327908, 2004-122115, or English family members US2004/142105 (Al), US Patent No. 7,250,190, and US2007/251448A1, which are expressly incorporated herein by reference in their entirety).

The spray-coating method is a method in which an atomized coating liquid is blown onto a surface being coated to conduct coating. By controlling the discharge width of the atomized coating liquid, it is possible to apply a coating liquid of desired quantity on a targeted position on the surface being coated. This affords the advantage of high coating liquid use efficiency. However, in the manufacturing of coating lenses, the forming of functional films by the spray-coating method has not yet to be put into practice for the following reasons.

In the spray-coating method, an atomizing device of the air atomizing type that atomizes a liquid by means of compressed air, or an atomizing device of the airless atomizing type that atomizes a liquid by applying high pressure and extruding the liquid through a discharge outlet is primarily employed. With the air atomizing type, high air pressure is required to atomize the coating liquid. With both the air atomizing type and the airless atomizing type, the atomized coating liquid is applied on the surface being coated while spreading out radially from the discharge outlet. To apply a desired amount of coating liquid at a desired position, a high air pressure gas flow is normally directed toward the surface being coated through air flow blowing outlets provided around the discharge outlet during spraying of the atomized coating liquid, and the discharge width of the atomized coating liquid is controlled.

Thus, great air pressure is applied to the surface being coated by the atomizing device. However, the surfaces of many eyeglass lenses have curvature (they are curved surfaces) that is concave or convex. When high air pressure is applied to the curved surface, the coating liquid that has been coated on the surface flows peripherally outward in the case of a convex surface and toward the center in the case of a concave surface. The coating layer that is formed ends up having a large amount of variation in in-plane film thickness. As a countermeasure, the amount of leveling agent could conceivably be reduced to decrease the fluidity of the coating liquid. However, a coating liquid of low fluidity cannot readily be employed to form a smooth coating layer (a so-called "mirror surface film") that can be employed on an eyeglass lens. Further, the air pressure could conceivably be reduced to lower the air pressure that is applied to the coating liquid coated on the surface being coated, but when that is done, it may become difficult to atomize the coating liquid. With both the air atomizing type and the airless atomizing type, it may become impossible to control the discharge width of the atomized coating liquid with an air flow, and the advantage of high coating liquid use efficiency that is afforded by spray-coating ends up being lost.

### Summary of the Invention

An aspect of the present invention provides for a means of manufacturing an eyeglass lens having a coating layer with good in-plane thickness uniformity by the spray-coating method.

The present inventor conducted extensive research. As a result, he made the novel discovery that by using an ultrasonic wave atomizing device, which atomizes a liquid by ultrasonic wave vibration without applying compressed air or pressure, to coat a coating liquid for forming a functional film by the spray-coating method, it was possible to form a functional film of desired thickness and little variation in in-lane film thickness without strongly regulating the discharge width of the atomized coating liquid with an air flow. That was because the mist of coating liquid atomized by ultrasonic waves had the property of being applied on the surface being coated without widely spreading after being discharged through the discharge outlet. As a result, it was possible to avoid applying high air pressure to the coating liquid that has been coated on the surface being coated, permitting the formation of a functional film of desired thickness on a lens substrate without producing great in-plane film thickness variation due to air pressure.

The present inventor conducted further extensive research based on the above discovery, and on that basis, finally devised the present invention.

An aspect of the present invention relates to a method of manufacturing an eyeglass lens comprising coating a coating liquid on a surface of a lens substrate being coated to form a coating layer, which further comprises:
conducting the coating by spraying a coating liquid, which has been atomized in an ultrasonic wave atomizing device disposed above the surface being coated of a curved shape, toward the surface being coated through a discharge outlet of the ultrasonic wave atomizing device, with the ultrasonic wave atomizing device comprising an ultrasonic wave atomization element atomizing a liquid by ultrasonic wave vibration, and an air flow blowing outlet for regulating a discharge width of an atomized liquid; and
either not blowing an air flow from the air flow blowing outlet, or blowing an air flow from the air flow blowing outlet at an air speed generated by the air flow on the surface being coated of equal to or less than 0.8 m/s during discharging of the atomized coating liquid.

In an embodiment, the surface being coated has a concave or convex shape, with a radius of curvature R of equal to or less than 610 mm.

An embodiment of the above manufacturing method comprises, during the coating, controlling a coating position of the atomized coating liquid by scanning the discharge outlet of the ultrasonic wave atomizing device so as to trace a path comprised of a combination of straight lines on the surface being coated.

In an embodiment, the air flow blown through the air flow blowing outlet is equal to or less than 15 kPa.

In an embodiment, the coating is conducted in a state where a distance between the discharge outlet and a geometric center of the surface being coated ranges from 30 mm to 150 mm.

In an embodiment, the ultrasonic wave atomizing device comprises the air flow blowing outlet disposed along a perimeter surrounding the discharge outlet.

In an embodiment, the ultrasonic wave atomizing device comprises the blowing outlet along an entire perimeter surrounding the discharge outlet.

A further aspect of the present invention relates to:
an eyeglass lens obtained by the manufacturing method.

An aspect of the present invention can provide a high-quality eyeglass lens having a functional film without great variation in in-plane film thickness.

### Brief Description of Drawings

[Fig. 1] Fig. 1 shows a schematic diagram of the front end of an ultrasonic wave atomizing device that can be employed in an aspect of the present invention.
[Fig. 2] Fig. 2 shows an example of the coating path (scan path of the discharge outlet) in an aspect of the present invention.
[Fig. 3] Fig. 3 is a digital camera photograph of a lens on which has been formed a cured film in Comparative Example 1.
[Fig. 4] Fig. 4 is a digital camera photograph of a lens on which has been formed a cured film in Example 1.

### Modes for carrying out the Invention

An aspect of the present invention relates to a method of manufacturing an eyeglass lens comprising forming a coating layer by coating a coating liquid on the surface of a lens substrate being coated.

The above manufacturing method further comprises:
conducting the coating by spraying a coating liquid, which has been atomized in an ultrasonic wave atomizing device disposed above the surface being coated of a curved shape, toward the surface being coated through a discharge outlet of the ultrasonic wave atomizing device, with the ultrasonic wave atomizing device comprising an ultrasonic wave atomization element atomizing a liquid by ultrasonic wave vibration, and an air flow blowing outlet for regulating a discharge width of an atomized liquid; and
either not blowing an air flow from the air flow blowing outlet, or blowing an air flow from the air flow blowing outlet at an air speed generated by the air flow on the surface being coated of equal to or less than 0.8 m/s during discharging of the atomized coating liquid.

In the method of manufacturing an eyeglass lens of the present invention, an ultrasonic wave atomizing device that atomizes a liquid by ultrasonic wave vibration is employed as the atomizing device for spray coating. With the ultrasonic wave atomizing device, by controlling the discharge width of the coating liquid by means of an air flow without applying great air pressure to the surface being coated during discharging of the atomized coating liquid, or without such controls, it becomes possible to form on a lens substrate a functional film of desired thickness without great variation in the in-plane film thickness.

The present invention will be described in greater detail below.

In the method of manufacturing an eyeglass lens of the present invention, the surface that is coated with the coating liquid by spray coating (the surface being coated) can be the surface of the lens substrate or the surface of a functional film that has been formed on the lens substrate. The lens substrate is not specifically limited. A lens substrate comprised of a material that is commonly employed in eyeglass lenses can be employed. Specific examples are plastic, inorganic glass, and the like. The thickness and diameter of the lens substrate are not specifically limited. The thickness is normally about 1 to 30 mm and the diameter about 50 mm to 100 mm.

The shape of the surface being coated with the coating liquid is a curved shape. This is because, on a flat surface, a large amount of variation in in-plane film thickness would not be imparted to the coating layer that is formed due to the application of a large amount of air pressure to the coating liquid that is applied on the surface being coated. In order for the present invention to achieve a pronounced effect, the shape of the surface being coated is desirably a concave or convex shape with a radius of curvature R of less than 650 mm, for example, a radius of curvature R of equal to or more than 50 mm but less than 650 mm, preferably a concave or convex shape with a radius of curvature R of equal to or less than 610 mm.

The ultrasonic wave atomizing device for coating the coating liquid on the surface being coated will be described next

The atomizing device that is employed to coat the coating liquid in the present invention is an ultrasonic wave atomizing device. In contrast to the air atomization type where a liquid is atomized with compressed air within the device and to the airless atomization type where high pressure is applied to extrude the liquid through the discharge outlet and atomize it, the liquid is atomized by ultrasonic wave vibration. Specifically, within the ultrasonic wave atomizing device, a coating liquid is fed to and comes in contact with vibrators that undergo ultrasonic wave vibration, thereby atomizing the coating liquid. The atomized coating liquid is sprayed through the discharge outlet connected to the ultrasonic wave atomization element toward the surface to be coated, which is positioned beneath the ultrasonic wave atomizing device. The mist of liquid that is formed by an air atomization type or airless atomization type atomizing device has the property of reaching the surface being coated while widely spreading radially after being discharged through the discharge outlet. Thus, it is difficult to apply a quantity of coating liquid that is adequate to form a coating layer of desired film thickness on the surface being coated without directing a high pressure air flow in the same direction as the mist to regulate the width of the discharge. However, as set forth above, the air flow that is employed causes the coating liquid that has been applied on the surface being coated to move about, resulting in in-plane film thickness variation in the coating layer that is formed.

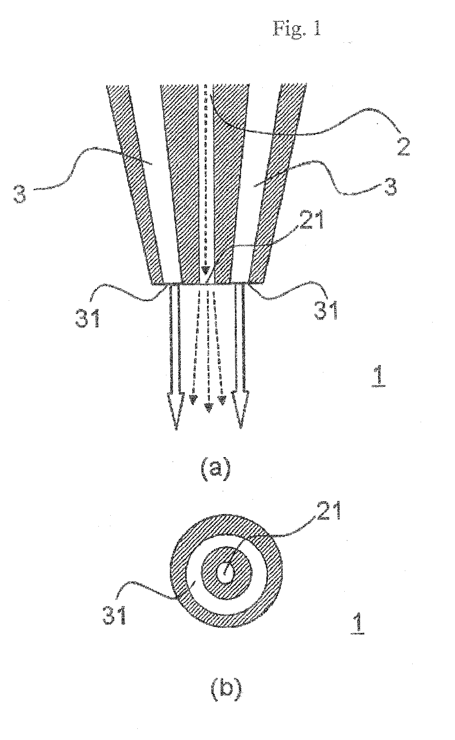

By contrast, the mist of coating liquid that is formed in an ultrasonic wave atomizing device has the property of coating the surface being coated without widely spreading following discharge through the discharge outlet. Thus, the discharge width can be controlled without directing a high-pressure air flow in the same direction as the mist of coating liquid. As a result, it becomes possible to form a coating layer of desired film thickness without producing great variation in the in-plane film thickness. This point will be described in detail. The ultrasonic wave atomizing device employed in the present invention comprises an ultrasonic atomization element that atomizes a liquid by ultrasonic wave vibration, and the air flow blowing outlet for regulating the discharge width of the atomized liquid. Fig. 1 is a schematic diagram of the front end portion of such an ultrasonic wave atomizing device. Fig. 1(a) is a sectional view of front end nozzle 1 of the ultrasonic wave atomizing device. Fig. 1(b) is a plan view of the configuration of the front end portion of front end nozzle 1. The front end nozzle 1 shown in Fig. 1 comprises an atomized liquid discharge outlet 21 connected to the ultrasonic wave atomization element (not shown) by means of an atomized liquid flow passage, and an air flow blowing outlet 31 connected to an air flow generating source (not shown) by an air flow passage 3. In Fig. 1, the hollow white arrows schematically show the discharge direction of the gas flow, and the dotted line arrows schematically show the discharge direction of the atomized coating liquid. In an aspect of the present invention, during the discharge of atomized coating liquid, as indicated schematically by the hollow white arrows in Fig. 1, an air flow is discharged through the air flow blowing outlet to regulate the discharge width of the atomized coating liquid. The blowing direction of the air flow is the direction of the surface being coated, in the same manner as the discharge direction of the coating liquid. However, it does not have to be perpendicularly straight down. It need only be directed toward the center axis side (inside) of the front end nozzle. By blowing the air flow more toward the inside than perpendicularly straight down, it is possible to narrow the discharge width of the atomized coating liquid. Further, by partially varying the amount of air flow that is blown and/or the blowing direction, it is possible to control the discharge direction and the discharge width of the atomized coating liquid. Fig. 1 shows an example in which an air flow blowing outlet is present around the entire perimeter in a manner surrounding the discharge outlet through which the atomized coating liquid is discharged. However, the air flow blowing outlet needs not necessarily surround the entire perimeter of the discharge outlet. It is also possible for one blowing outlet, desirably two or more (multiple) blowing outlets, to be provided somewhere around the discharge outlet. Multiple blowing outlets arranged at equal spacing are desirable to effectively regulate the discharge width.

In an embodiment where the air flow is blown through the air flow blowing outlet, blowing is conducted so that the speed of the air that is generated on the surface being coated by the air flow that is blown through the air flow blowing outlets is equal to or less than 0.8 m/s. Normally, to generate the air flow, compressed air is employed. However, an inert gas such as nitrogen gas or a noble gas can be employed. In an embodiment where an air flow is blown, when the air flow is of an intensity such that the air speed exceeds 0.8 m/s, the coating liquid that has been applied on the surface being coated ends up being displaced by the air pressure due to the air flow and the thickness of the coating layer that is formed ends up varying greatly in-plane. As set forth above, the mist of the coating liquid that is atomized by ultrasonic wave vibration does not widely spread following discharge through the discharge outlet relative to the mist that is obtained by other atomization methods, making it possible to control the discharge width with a relatively weak air flow. Even when an air flow is not utilized, it is possible to apply a quantity of coating liquid to the surface being coated that is adequate to form a coating layer of desired film thickness. Accordingly, an embodiment where an atomized coating liquid is sprayed without blowing an air flow is also covered by the present invention. From the perspective of more effectively reducing variation in the in-plane film thickness of the coating layer that is formed, it is desirable to employ the embodiment where an air flow is utilized.

As set forth above, it is not necessary to utilize an air flow to regulate the discharge width of the coating liquid during discharge of atomized coating liquid in the present invention. Further, a relatively weak air flow is utilized to achieve the above air speed in the embodiment where an air flow is utilized. Thus, it is possible to prevent displacement of the coating liquid that has been applied to the surface being coated as set forth above. The advantages set forth below can also be achieved.

When a strong air flow is applied to regulate the discharge width of the mist of atomized coating liquid, drying of the coating liquid that has been applied to the surface being coated by the air flow is promoted by the air flow. However, when the coating liquid that has been applied to the surface being coated ends up drying immediately, an uneven coating is produced and it becomes difficult to form a smooth coating layer. Accordingly, in spray-coating of the air atomization type or airless atomization type requiring the application of a strong air flow, for example, it becomes necessary to adopt countermeasures such as selecting a solvent with little volatility (a solvent with a high boiling point) as the solvent employed in the coating liquid, reducing the solid component concentration of the coating liquid to inhibit rapid drying, and the like.

By contrast, in the present invention, it is not necessary to utilize an air flow. In the embodiment where an air flow is utilized, a relatively weak air flow is employed to achieve the above air speed, making it possible to avoid excessively rapid drying of the coating liquid applied on the surface being coated. Thus, the scope of selection of solvents that can be employed in the coating liquid widens, and the solid component concentration can be increased. The higher the solid component concentration of the coating liquid employed, the thicker the coating layer formed tends to be. Thus, the fact that the solid component concentration of the coating liquid has been increased is advantageous to forming a thick coating layer.

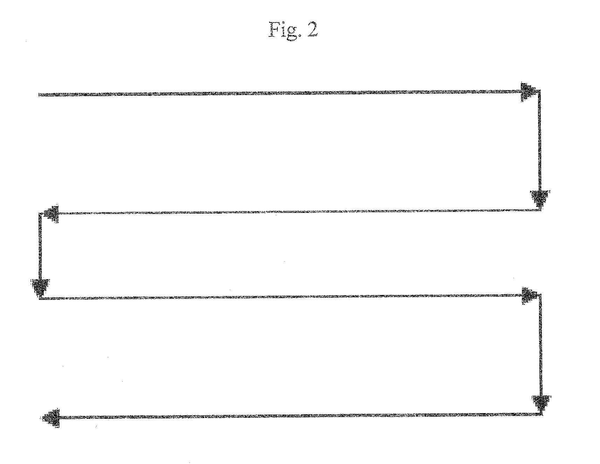

Since the discharge rate of the mist that is atomized by ultrasonic waves is lower than that of mists that are atomized by other methods, there is less bouncing back from the coated surface. This is advantageous from the perspective of application efficiency. The flow of mist that is atomized by ultrasonic waves affords higher uniformity in the amount of coating within the applied region than the flow of mists obtained by other methods. Accordingly, it becomes possible to readily achieve a coating of uniform amount of coating without varying the discharge level by location or tracing a complex coating path to eliminate coating unevenness. In this regard, Fig. 2 shows an example of the coating path (scan path of the discharge outlet) in an aspect of the present invention. In an aspect of the present invention, in this manner, it becomes possible to conduct coating with uniform amount of coating without varying the discharge level by location. This is done by controlling the application position of the atomized coating liquid by scanning the discharge outlet of the ultrasonic wave atomizing device so as to trace a simple path comprised of a combination of straight lines on the surface being coated. The perpendicular direction position (height) of the discharge outlet can be varied during coating, but it is possible to achieve a uniform coating without special variation in the present invention. Although it is possible to vary the discharge level of the coating liquid by position, a uniform coating can be achieved in the present invention without variation, as set forth above. Following coating, as needed, post-processing such as a drying step, curing step (heating, irradiation with light, or the like) and the like can be conducted to form a coating layer on the lens substrate.

The air speed that is generated on the surface being coated by the air flow that is blown through the air flow blowing outlet can be controlled by the pressure of the air flow that is blown out through the air flow blowing outlet, the distance between the air flow blowing outlet and the surface being coated, and the like. The pressure of the air flow is the pressure of the air flow at the air flow blowing outlet, and is identical to the pressure of the compressed air that is employed to generate the air flow. The pressure of the air flow blown out through the air flow blowing outlets can be equal to or more than 1 kPa, for example. However, a low pressure yields the following advantages.

To achieve a low air speed of equal to or less than 0.8 m/s on the surface being coated while blowing a high-pressure air flow, the air flow blowing outlet is adequately distant from the surface being coated. However, the greater the distance becomes, the lower the efficiency with which the discharge width is controlled by the air flow. Further, increasing the distance between the air flow blowing outlet and the surface being coated means increasing the distance between the discharge outlet of the atomized coating liquid and the surface being coated. The greater the distance between the discharge outlet and the surface being coated, the greater the quantity of liquid that volatizes to apply the surface being coated. As a result, the amount of coating liquid required to apply a desired amount of coating liquid on the surface being coated increases. By contrast, it becomes possible to achieve a low air speed of equal to or less than 0.8 m/s on the surface being coated without widely spreading the distance between the air flow blowing outlet/discharge outlet and the surface being coated by blowing a low pressure air flow.

Based on the above, the pressure of the air flow is desirably equal to or less than 15 kPa, preferably equal to or less than 12 kPa, and more preferably, equal to or less than 10 kPa. In an embodiment of the present invention, the above air speed can be achieved by setting the distance between the discharge outlet and the geometric center of the surface being coated to about 30 mm to 150 mm. For example, by blowing an air flow toward the surface being coated with a pressure of 1 to 10 kPa in a state where the distance between the discharge outlet and the geometric center of the surface being coated is 40 mm to 60 mm, it is possible to form a coating layer with particularly good in-plane film thickness uniformity.

The coating liquid that is coated by the spray-coating set forth above can be of a formula permitting the forming of a desired functional film based on the properties required for the eyeglass lens. Examples of such functional films are hardcoats for enhancing durability, antireflection films for imparting the antireflection property, polarizing films for imparting polarizing property, photochromic films for imparting photochromic property, and primers for enhancing adhesion between the lens substrate and a functional film or between two functional films. The coating liquid formulas for forming these functional films and the methods of preparing them are both well-known. The viscosity of a coating liquid suited to spray-coating is about 1 mPa·s to 50 mPa·s at 20°C. Thus, it is desirable to employ a coating liquid that has been prepared with a viscosity suited to the desired film thickness that falls within the above range. The thickness of the functional films that are formed are not specifically limited in the present invention. For example, the center thickness can be about 1 µm to 100 µm. For example, in the case of a hardcoat, to enhance the scratch resistance of an eyeglass lens, a film thickness of equal to or more than 5 µm, or even equal to or more than 9 µm, is desirable. However, the greater the film thickness, the more pronounced the impact on in-plane film thickness variation becomes, and the greater the tendency of various defects (interference fringes, optical distortion, cracks, and the like) to be produced. By contrast, since it is possible to form a coating layer with little variation in in-plane film thickness in the present invention, it is possible to obtain a high-quality eyeglass lens without the generation of various defects while having a thick hardcoat.

### EXAMPLES

The present invention will be further described below through Examples. However, the present invention is not limited to the embodiments shown in Examples.

### 1. Preparation of coating liquid for forming hardcoat

To 17 mass parts of the organic silicon compound γ-glycidoxypropyltrimethoxysilane (KBM-403 made by Shin-Etsu Chemical Co., Ltd.) were added 30 mass parts of solvent in the form of methanol.

This was stirred for 10 minutes, after which 1 mol/L in the form of 1.2 mass parts of nitric acid were added as a pH adjusting agent. The mixture was then stirred for another 10 minutes. To the solution thus obtained were added 44 mass parts of colloidal silica (Ludox AM made by Grace Corp.) and the mixture was stirred for 24 hours at room temperature.

Following this 24 hours of stirring, one mass part of a curing agent in the form of aluminum acetylacetonate and 0.1 mass part of leveling agent (FZ-77, made by Dow Corning Toray Co., Ltd.) were added. The mixture was stirred at room temperature for another 48 hours to prepare a coating liquid for forming a hardcoat. The viscosity of the coating liquid obtained was 9 mPa·S (20°C).

### 2. Examples and Comparative Examples relating to forming a hardcoat by spray-coating

### [Example 1]

The coating liquid prepared in 1. above was coated on the surface of a plastic lens substrate with an ultrasonic wave atomizing device made by Sono-Tek. The front nozzle of the ultrasonic wave atomizing device employed was configured as shown in Fig. 1. The ultrasonic wave atomizing device was positioned above the lens substrate so that the distance between the discharge outlet and the geometric center of the surface of the lens substrate (surface being coated) was 60 mm. A plastic lens (brand name "HILUX") made by HOYA Corp. was employed. The convex surface with a radius of curvature of R=610 mm was coated. With the coating liquid in a pre-spraying state, compressed air was blown with a pressure of 1 kPa from the air flow blowing outlet. An ANEMOMETER AM-095 made by Rion Co., Ltd. was employed as the air speed measuring device. The measurement element of the device was disposed in the center portion of the surface of the lens substrate which had been positioned as set forth above. The maximum air speed when the coating operation set forth below was reproduced was measured at 0.4 m/s.

Subsequently, a mist of the coating liquid atomized by ultrasonic waves was discharged through the discharge outlet of the ultrasonic wave atomizing device and an air flow was blown perpendicularly straight down through the air flow blowing outlet under the above conditions. At the same time, the front nozzle of the ultrasonic wave atomizing device was scanned first in the X-axis direction, displaced about 10 mm in the Y-axis direction perpendicular to the X-axis direction, and then scanned again in the X-axis direction in a cycle that was repeated to spray-coat the coating liquid over the entire surface of the lens substrate in a path comprised of straight lines, as shown in Fig. 2. (The position of the front nozzle in the Z-axis direction was fixed, and the amount of coating liquid discharged was kept constant.) Subsequently, the coating liquid was dried with hot air and then subjected to a curing treatment by heating to obtain a cured film.

### [Example 2]

A plastic lens (brand name "HILUX") made by HOYA Corp. was employed as the lens substrate. With the exception that the coating was conducted on the concave surface with a radius of curvature of R=60 mm, a cured film was obtained by the same method as in Example 1. The air speed (maximum air speed) produced on the surface being coated by the air flow blown through the air flow blowing outlet was identical to that in Example 1, at 0.4 m/s.

### [Example 3]

With the exceptions that compressed air with a pressure of 10 kPa was employed as the compressed air blown through the air flow blowing outlet and the ultrasonic wave atomizing device was positioned above the lens substrate so that the distance between the discharge outlet and the geometric center of the lens substrate surface (surface being coated) was 100 mm, a cured film was obtained by the same method as in Example 1. The air speed (maximum air speed) produced on the surface being coated by the air flow blown through the air flow blowing outlet was 0.8 m/s as measured by the above method.

### [Example 4]

With the exceptions that compressed air with a pressure of 12 kPa was employed as the compressed air blown through the air flow blowing outlet and the ultrasonic wave atomizing device was positioned above the lens substrate so that the distance between the discharge outlet and the geometric center of the lens substrate surface (surface being coated) was 150 mm, a cured film was obtained by the same method as in Example 1. The air speed (maximum air speed) produced on the surface being coated by the air flow blown through the air flow blowing outlet was 0.4 m/s as measured by the above method.

### [Example 5]

With the exceptions that compressed air with a pressure of 1 kPa was employed as the compressed air blown through the air flow blowing outlet and the ultrasonic wave atomizing device was positioned above the lens substrate so that the distance between the discharge outlet and the geometric center of the lens substrate surface (surface being coated) was 30 mm, a cured film was obtained by the same method as in Example 1. The air speed (maximum air speed) produced on the surface being coated by the air flow blown through the air flow blowing outlet was 0.5 m/s as measured by the above method.

### [Example 6]

With the exception that an ultrasonic wave atomizing device made by Sonia Corp. was employed as the ultrasonic wave atomizing device, a cured film was obtained by the same method as in Example 1. The ultrasonic wave atomizing device employed did not have an air flow blowing mechanism, so during discharging of the coating liquid that had been atomized by ultrasonic waves, no air flow was blown.

### [Comparative Example 1 (in which an air atomizing type atomizing device was employed.)]

With the exceptions that an air atomizing type atomizing device in the form of a low pressure spray nozzle 781S-SS made by San-Ei Tech was employed instead of an ultrasonic wave atomizing device as the atomizing device and an air flow was generated with compressed air with a pressure of 200 kPa to control the discharge width, a cured film was obtained by the same method as in Example 3. The air speed (maximum air speed) produced on the surface being coated by the air flow blown through the air flow blowing outlets was 1.0 m/s as measured by the above method.

### [Reference Example 1 (coating on a flat surface with an air atomizing type atomizing device)]

With the exception that the plastic lens made by HOYA Corp. (brand name "HILUX") with a convex surface of radius of curvature R=610 mm was replaced with a commercial polycarbonate flat sheet as the coating surface, a cured film was obtained by the same method as in Comparative Example 1.

### [Comparative Example 2 (in which an air atomizing type atomizing device was employed.)]

An attempt was made to spray-coat a coating liquid under the same conditions as in Comparative Example 1 using the same air atomizing type atomizing device as in Comparative Example 1 but changing the pressure of the compressed air employed to generate the air flow to 20 kPa. However, the discharge width of the coating liquid could not be controlled by the air flow. As a result, it was not possible to apply the coating liquid to the surface being coated in an amount adequate to form a coating film. The air speed (maximum air speed) produced on the surface being coated by the air flow blown through the air flow blowing outlets was 0.4 m/s as measured by the above method.

### [Comparative Example 3 (use of an air atomizing type atomizing device)]

With the exception that the pressure of the compressed air employed to generate the air flow was changed to 100 kPa, a cured film was obtained by the same method as in Comparative Example 1. The air speed (maximum air speed) produced on the surface being coated by the air flow blown through the air flow blowing outlets was 1.1 m/s as measured by the above method.

### [Comparative Example 4 (use of an ultrasonic wave atomizing device)]

With the exceptions that compressed air with a pressure of 10 kPa was employed as the compressed air blown through the air flow blowing outlet and the ultrasonic wave atomizing device was positioned above the lens substrate so that the distance between the discharge outlet and the geometric center of the surface of the lens substrate (surface being coated) was 80 mm, a cured film was obtained by the same method as in Example 1. The air speed (maximum air speed) produced on the surface being coated by the air flow blown through the air flow blowing outlet was 1.0 m/s as measured by the above method.

### 3. Evaluation methods

### (1) Film thickness measurement

The film thickness at the geometric center of each of the cured films formed in the above Examples and Comparative Examples was calculated from an optical interference film thickness calculation formula based on interference spectra measured a spectrophotometer (U-4100, made by Hitachi, Ltd.).

### (2) Evaluation of uniformity of in-plane film thickness

The surface of the cured films formed in Examples and Comparative Examples was visually observed and the uniformity of the in-plane film thickness was evaluated based on the following scale.

### Evaluation scale

A Mirror surface film without steps or coating unevenness on the coated film surface
B No steps, but some coating unevenness could be visually identified
C Clear steps visually identifiable on the film surface

The results of the above are given along with the coating conditions of Examples and Comparative Examples in Table 1 below. As will be seen in Table 1, the present invention could yield high-quality eyeglass lenses having a coating layer free of substantial variation in in-plane coating thickness.

### (3) Determination of presence or absence of accumulated liquid

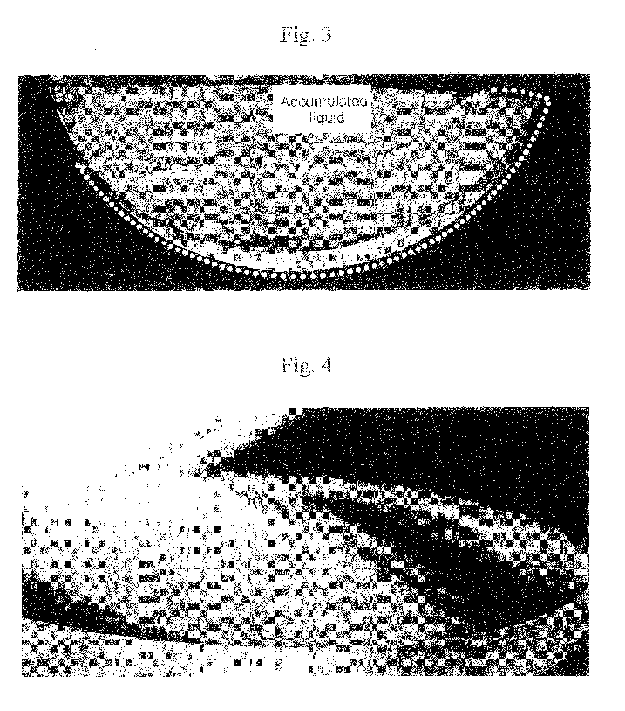

Fig. 3 is a digital camera photograph of a lens on which a cured film was formed in Comparative Example 1. Fig. 4 is a digital camera photograph of a lens on which a cured film was formed in Example 1. Based on Fig. 3, it can be determined that accumulation of liquid occurred along the perimeter of the convex surface of the cured film formed in Comparative Example 1. As set forth above, the accumulated liquid was caused by the application of high air pressure to the convex surface with an air atomizing type atomizing device. By contrast, no accumulated liquid was observed in the perimeter portion of the convex surface of the cured film formed in Example 1 that is shown in Fig. 4. This indicates that the present invention could effectively prevent the generation of accumulated liquid on the curved surface.

**[Table 1]**

| | Atomizing method | Pressure of air flow (kPa) | Distance between discharge outlet and geometric center of the surface being coated (mm) | Air speed produced on the surface being coated by air flow | Radius of curvature of the surface being coated | Film thickness at the geometric center | Uniformity of in-plane film thickness |
|---|---|---|---|---|---|---|---|
| | | | | (m/s) | (mm) | (*µ*m) | |
| Ex. 1 | Ultrasonic wave atomizing | 1 | 50 | 0.4 | 610 (Convex surface) | 12 | A |
| Ex. 2 | Ultrasonic wave atomizing | 1 | 50 | 0.4 | 60 (Concave surface) | 15 | A |
| Ex. 3 | Ultrasonic wave atomizing | 10 | 100 | 0.8 | 610(Convex surface) | 11 | B |
| Ex. 4 | Ultrasonic wave atomizing | 12 | 150 | 0.4 | 610(Convex surface) | 6 | B |
| Ex. 5 | Ultrasonic wave atomizing | 1 | 30 | 0.5 | 610(Convex surface) | 13 | B |
| Ex. 6 | Ultrasonic wave atomizing | 0 | 50 | 0 | 610(Convex surface) | 12 | B |
| Comp. Ex.1 | Air atomizing | 200 | 100 | 1.0 | 610(Convex surface) | 9 | C |
| Ref. Ex.1 | Air atomizing | 200 | 100 | 1.0 | (Flat surface) | 9 | C |
| Comp. Ex.2 | Air atomizing | 20 | 100 | 0.4 | 610(Convex surface) | - | (Atomizing was not possible) |
| Comp. Ex.3 | Ultrasonic wave atomizing | 3 | 30 | 1.1 | 610(Convex surface) | 13 | C |
| Comp. Ex.4 | Ultrasonic wave atomizing | 10 | 80 | 1.0 | 610(Convex surface) | 10 | C |

### Industrial Applicability

The present invention is useful in the field of manufacturing eyeglass lenses.

## Claims

1. A method of manufacturing an eyeglass lens comprising coating a coating liquid on a surface of a lens substrate being coated to form a coating layer, which further comprises:
conducting the coating by spraying a coating liquid, which has been atomized in an ultrasonic wave atomizing device disposed above the surface being coated of a curved shape, toward the surface being coated through a discharge outlet of the ultrasonic wave atomizing device, with the ultrasonic wave atomizing device comprising an ultrasonic wave atomization element atomizing a liquid by ultrasonic wave vibration, and an air flow blowing outlet for regulating a discharge width of an atomized liquid; and
either not blowing an air flow from the air flow blowing outlet, or blowing an air flow from the air flow blowing outlet at an air speed generated by the air flow on the surface being coated of equal to or less than 0.8 m/s during discharging of the atomized coating liquid.

2. The method of manufacturing an eyeglass lens according to claim 1, wherein the surface being coated has a concave or convex shape, with a radius of curvature R of equal to or less than 610mm.

3. The method of manufacturing an eyeglass lens according to claim 1 or 2, which comprises, during the coating, controlling a coating position of the atomized coating liquid by scanning the discharge outlet of the ultrasonic wave atomizing device so as to trace a path comprised of a combination of straight lines on the surface being coated.

4. The method of manufacturing an eyeglass lens according to any of claims 1 to 3, wherein the air flow blown through the air flow blowing outlet is equal to or less than 15 kPa.

5. The method of manufacturing an eyeglass lens according to any of claims 1 to 4, wherein the coating is conducted in a state where a distance between the discharge outlet and a geometric center of the surface being coated ranges from 30 mm to 150 mm.

6. The method of manufacturing an eyeglass lens according to any of claims 1 to 5, wherein the ultrasonic wave atomizing device comprises the air flow blowing outlet disposed along a perimeter surrounding the discharge outlet.

7. The method of manufacturing an eyeglass lens according to claim 6, wherein the ultrasonic wave atomizing device comprises the blowing outlet along an entire perimeter surrounding the discharge outlet.

8. An eyeglass lens obtained by the manufacturing method according to any of claims 1 to 7.
